# EUROPÄISCHE PATENTSCHRIFT

(11) **EP 1 510 703 B1**
(45) Veröffentlichungstag und Bekanntmachung des Hinweises auf die Patenterteilung: **26.02.2014**
(21) Anmeldenummer: 04019862.4
(22) Anmeldetag: 20.08.2004
(51) Int. Cl.: F16B 5/12, F25D 23/04

(54) **Steckverbindung**
Plug-in connection
Liaison par emboîtement

(30) Priorität: 26.08.2003 DE 20313198 U
(43) Veröffentlichungstag der Anmeldung: 02.03.2005
(73) Patentinhaber: BSH Bosch und Siemens Hausgeräte GmbH, 81739 München (DE)
(72) Erfinder: Malisi, Michaela, 89522 Heidenheim (DE)

(56) Entgegenhaltungen:
- EP-A1- 1 510 703
- US-A- 3 382 615
- US-A- 3 984 163
- US-A- 5 040 856

## Beschreibung

Die vorliegende Erfindung betrifft ein Kältegerät mit einer Steckverbindung zwischen zwei Profilelementen, einem eine Feder aufweisende ersten Element und einem eine Nut zum Aufnehmen der Feder aufweisenden zweiten Element. Bei dem ersten Element kann es sich beispielsweise um eine Platte handeln, deren Rand die Feder bildet, und das zweite Elemente ist ein Profil, das auf den Rand der Platte aufgesteckt wird, um diesen vor Beschädigung zu schützen.

Um eine feste Klemmung der Elemente zu gewährleisten, auch wenn die Dicke der Feder und die Breite der Nut innerhalb gewisser Toleranzen streuen, ist es üblich, die Nut geringfügig breiter zu machen, als es der Dicke der Feder entspricht, und an den Schenkeln der Nut, in einer Entfernung von ihrem Boden, in die Nut hinein gerichtete Vorsprünge vorzusehen, die unter elastischer Verformung der Schenkel die Feder einklemmen. Wenn der Abstand dieser Vorsprünge vom Boden der Nut nicht identisch ist, ergibt sich das Problem, dass die zwei Elemente in Bezug aufeinander zum Verkippen neigen.

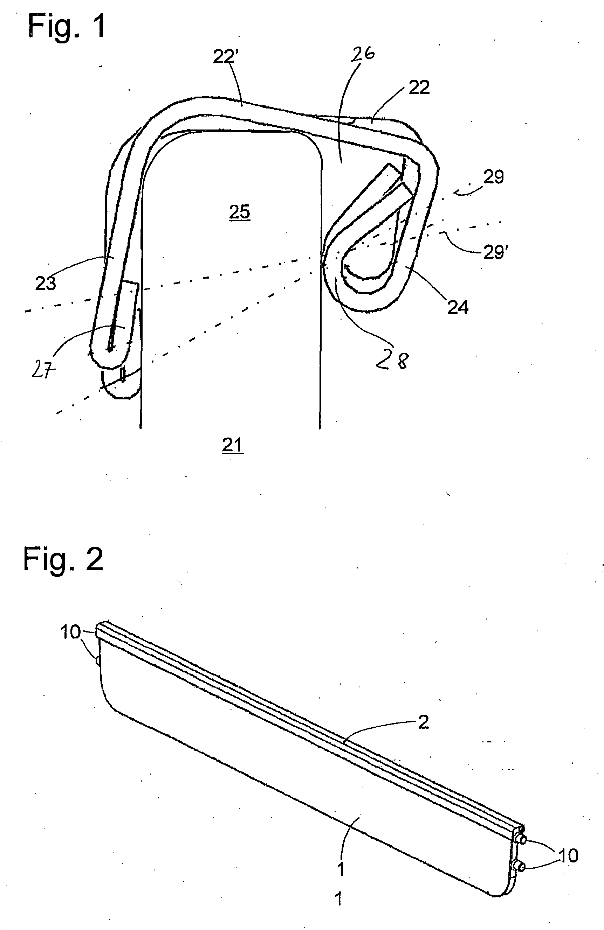

Dies ist in Figur 1 veranschaulicht. Hier ist auf eine Platte 21 ein Profilelement 2 mit U-ähnlichem Querschnitt aufgesteckt. Das Profilelement ist in zwei Orientierungen, mit 22 beziehungsweise 22' bezeichnet, dargestellt, wobei 22 eine gewünschte Orientierung und 22' eine Orientierung ist, die sich tatsächlich einstellt. Das Profilelement hat zwei ungleich lange Schenkel 23, 24, die einen als Feder 25 fungierenden Randbereich der Platte 21 einklemmen. Dabei sind in die Nut 26 hinein gerichtete Vorsprünge jeweils durch umgebogene Randabschnitte 27, 28 an den freien Enden der Schenkel 23, 24 gebildet. Diese Vorsprünge berühren die Feder 25 jeweils in unterschiedlichen Abständen vom Boden der Nut 6 beziehungsweise der Oberkante der Feder 25. Eine die Kontaktpunkte zwischen dem Profilelement 22 und der Platte 21 auf beiden Seiten der Feder 25 verbindende Ebene ist in der Figur als strichpunktierte Linie eingezeichnet, die für die mit 22 bezeichnete gewünschte Position des Profilelements mit 29, für die sich tatsächlich einstellende Position 22' mit 29' bezeichnet ist. Wie man leicht sieht, ist der Abstand zwischen den Kontaktpunkten auf der Ebene 29' deutlich kürzer als auf der Ebene 29, das heißt die elastische Verbiegung der Schenkel 3 durch den Druck, den diese auf die Feder 25 ausüben, ist in der Orientierung 22' geringer.

Aufgabe der Erfindung ist, ein Kältegerät mit einer Steckverbindung anzugeben, bei der keine unerwünschte Verkippung des die Feder aufweisenden Elements und des die Nut aufweisenden Elements in Bezug zueinander auftritt.

Die Aufgabe wird gelöst durch ein Kältegerät mit einer Steckverbindung mit den Merkmalen des Anspruchs 1.

Indem die Feder mit einem einem der Schenkel zugewandten Vorsprung oder der Schenkel mit einem der Feder zugewandten Vorsprung versehen ist und die Kontaktpunkte zwischen dem Vorsprung des jeweils anderen Schenkels und der Feder einerseits und zwischen dem Vorsprung der Feder und dem einen Schenkel bzw. dem Vorsprung dieses Schenkels und der Feder andererseits eine Ebene definieren, die auf den sich an den Kontaktpunkten berührenden Oberflächen der Schenkel und der Feder senkrecht steht, ist gewährleistet, dass die Entfernung zwischen den Kontaktpunkten beiderseits der Feder minimal ist, so dass eine Verkippung der zwei Elemente gegeneinander nicht zu einer Entspannung der biegebelasteten Schenkel führen kann. Dadurch ist die Orientierung der Elemente der Steckverbindung gegeneinander stabilisiert. Ein an der Feder angeordneter Vorsprung hat darüber hinaus den Vorteil, dass der Schenkel des U-profilartigen Steckelements an seiner Schenkelfläche frei von Unterbrechungen ist und damit das Steckelement einfach herzustellen ist.

Um die Ebene der Kontaktpunkte zu definieren, genügen minimal drei Kontaktpunkte auf unterschiedlichen Seiten der Feder. Vorzugsweise bilden allerdings die Kontaktpunkte auf wenigstens einer Seite der Feder eine Linie.

Das die Nut aufweisende Element ist vorzugsweise aus einem Flachmaterial, etwa einem Metallstreifen geformt, und der Vorsprung des einen Schenkels ist durch einen in die Nut zurückgebogenen Randabschnitt des Flachmaterials gebildet. So verschwinden eventuelle scharfe Kanten, die beim Zuschneiden des Flachmaterials entstehen, im Innern der Nut, so dass sie einen Benutzer nicht gefährden können.

Aus dem gleichen Grund ist vorzugsweise auch der zweite Schenkel mit einem in die Nut zurückgebogenen Randabschnitt versehen.

Die Feder ist vorzugsweise mit ihrem Vorsprung einteilig ausgebildet. Dies ist insbesondere bei einem die Feder aufweisenden Element aus Kunststoff leicht realisierbar. Wenn es sich bei dem die Feder aufweisenden Element zum Beispiel um eine Glasplatte handelt, könnte der Vorsprung auch mit der Platte zweiteilig ausgeführt, zum Beispiel aufgeklebt sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Figur 1: bereits behandelt, eine Seitenansicht einer Platte, auf deren Rand ein Profilelement in herkömmlicher Weise aufgesteckt ist;
- Figur 2: eine perspektivische Ansicht einer Dekorplatte eines Türabstellers für ein Kältegerät als Anwendungsbeispiel der Erfindung;
- Figur 3: eine Seitenansicht der Dekorplatte aus Figur 2; und
- Figur 4: eine Seitenansicht eines Randbereichs eines Kühlgutträgers gemäß der Erfindung.

Die in Figur 2 in perspektivischer Ansicht gezeigte Dekorplatte setzt sich zusammen aus einer aus einem Kunststoffmaterial gespritzten Platte 1, auf deren oberen Rand ein aus Blech gebogenes Profilelement 2 unter elastischer Verformung aufgesteckt ist. Die Dekorplatte ist vorgesehen, um einen Teil einer Längswand eines Türabstellers zu bilden, der zum Aufnehmen von Kühlgut an der Innenseite einer Tür eines Kühlschranks oder anderen Kältegeräts montiert ist. An den Längsrändern der Platte 1 gebildete Zapfen 10 dienen zur Verankerung der Dekorplatte in einem Randausschnitt des Türabstellers.

Figur 2 zeigt eine Seitenansicht des oberen Bereichs der Dekorplatte. Deren oberer Randbereich oberhalb des höher gelegenen der zwei Zapfen 10 bildet eine Feder 5, die in eine Nut des Profilelements 2 eingreift. Das Profilelement ist aus einem streifenförmigen Zuschnitt, zum Beispiel aus Aluminium- oder Edelstahlblech, gebildet, in dem beiderseits eines zentralen Abschnitts 11 zwei Randstreifen in etwa rechtwinklig abgebogen sind, um die Feder 5 beidseitig umgreifende Schenkel 3, 4 zu bilden, wobei die äußersten Randzonen der Schenkel wiederum ins Innere der Nut 6 zurückgebogen sind und so in die Nut 6 hinein gerichtete Vorsprünge bilden. Die Länge der zwei Schenkel ist ungleich.

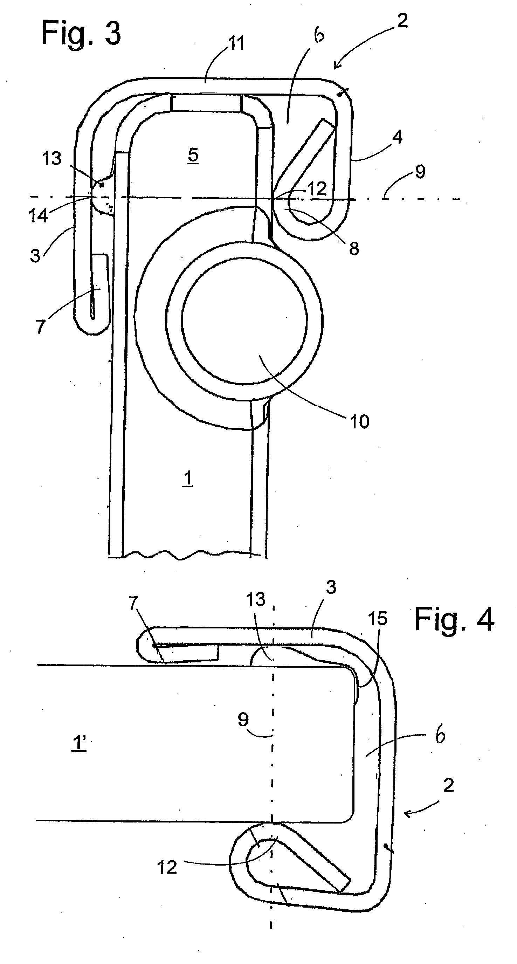

In Höhe einer Kontaktlinie aus Kontaktpunkten 12, die sich zwischen dem Vorsprung 8 des kürzeren Schenkels 4 und der Feder 5 senkrecht zur Ebene der Figur 3 erstreckt, ist an der dem längeren Schenkel 3 zugewandten Seite der Feder 5 eine sich ebenfalls senkrecht zur Ebene der Figur erstreckende Rippe 13 gebildet, deren Spitze den Schenkel 3 entlang einer zweiten Kontaktlinie aus Kontaktpunkten 14 berührt. Die sich an den Kontaktlinien aus Kontaktpunkten 12, 14 berührenden Oberflächen der Feder 5 und des Profilelements 2 stehen senkrecht auf der durch die Linien aus Kontaktpunkten 12, 14 definierten Klemmebene 9. Jede Verkippung des Profilelements 2 um eine zur Ebene der Figur 3 senkrechte Achse würde daher zu einer Vergrößerung des Abstandes zwischen den Kontaktlinien aus Kontaktpunkten 12, 14 und infolge dessen zu einem Auseinanderspreizen der Schenkel 3, 4 führen. Die dargestellte Orientierung des Profilelements 2 zur Platte 1 ist daher stabil.

Figur 4 zeigt in einer Seitenansicht analog der Figur 3 das gleiche Profilelement 2, aufgesteckt auf den Rand einer Glasplatte 1', beispielsweise eines Kühlgutträgers, der zur Montage im Innenraum eines Kühlschranks vorgesehen ist. Da es bei einer solchen Glasplatte 1' aufwändig ist, die den längeren Schenkel 3 der Profilelements 2 berührende Rippe 13 mit der Platte einteilig auszubilden, ist sie hier durch ein Kunststoffprofil realisiert, das auf die Platte 1' vollflächig aufgeklebt ist. Das Kunststoffprofil umfasst neben der eigentlichen Rippe 13 eine zur Vorderkante der Platte 1' hin gezogene Zunge 15 geringer Dicke, die beim Aufstecken des Profilelements 2 auf die Platte 1' verhindert, dass sich die Klebung zwischen der Rippe 13 und der Platte 1' unter dem Druck des Vorsprungs 7 des Schenkels 3 gegen die Rippe 13 ablöst und die Rippe 13 verschoben oder abgerissen wird.

## Patentansprüche

1. Kältegerät mit einer Steckverbindung mit einem eine Feder (5) aufweisenden ersten Element (1, 1'), welches ein Innenteil eines Kältegeräts wie etwa ein Türabsteller, ein Auszugkasten oder ein Fachboden ist, und einem eine Nut (6) zum Aufnehmen der Feder (5) aufweisenden zweiten Element (2), wobei die Nut (6) von einem Boden und zwei Schenkeln (3,4) begrenzt ist und wenigstens ein erster der Schenkel (4) einen ins Innere der Nut (6) eindringenden Vorsprung (8) aufweist, **dadurch gekennzeichnet, dass** die Feder (5) einen dem zweiten Schenkel (3) zugewandten Vorsprung (13) oder der zweite Schenkel (3) einen der Feder (5) zugewandten Vorsprung (13) aufweist, und dass Kontaktpunkte (12) zwischen dem Vorsprung (8) des ersten Schenkels (4) und der Feder (5) und/oder Kontaktpunkte (14) zwischen dem Vorsprung (13) der Feder (5) und dem zweiten Schenkel (3) bzw. dem Vorsprung (13) am zweiten Schenkel (3) und der Feder (5) eine Linie bilden und dass die Kontaktpunkte (12, 14) zwischen dem Vorsprung (8) des ersten Schenkels (4) und der Feder (5) einerseits und zwischen dem Vorsprung (13) der Feder (5) und dem zweiten Schenkel (3) bzw. dem Vorsprung (13) am zweiten Schenkel (3) und der Feder (5) andererseits eine Ebene (9) definieren, die auf den sich an den Kontaktpunkten (12, 14) berührenden Oberflächen der Schenkel (3, 4) und der Feder (5) senkrecht steht.

2. Kältegerät mit einer Steckverbindung nach Anspruch 1, **dadurch gekennzeichnet, dass** das die Nut (6) aufweisende Element (2) aus Flachmaterial geformt ist, und dass der Vorsprung (8) des ersten Schenkels (4) durch einen in die Nut zurückgebogenen Randabschnitt des Flachmaterials gebildet ist.

3. Kältegerät mit einer Steckverbindung nach Anspruch 2, **dadurch gekennzeichnet, dass** auch der zweite Schenkel (3) einen in die Nut (6) zurückgebogenen Randabschnitt aufweist.

4. Kältegerät mit einer Steckverbindung nach Anspruch 1 oder 2, **dadurch gekennzeichnet, dass** das die Nut (6) aufweisende Element (2) federnde Eigenschaften aufweist.

5. Kältegerät mit einer Steckverbindung nach einem der Ansprüche 1 bis 4, **dadurch gekennzeichnet, dass** die Feder (5) mit ihrem Vorsprung (13) einteilig ausgebildet ist.

6. Kältegerät mit einer Steckverbindung nach einem der Ansprüche 1 bis 4, **dadurch gekennzeichnet, dass** der sich an der Feder (5) abstützende Vorsprung (13) am zweiten Schenkel (3) durch spanlose Formgebung des zweiten Schenkel (3) erzielt ist.

## Claims

1. Refrigeration device with a plug-in connection with a first element (1, 1') having a spring (5), which is an internal part of a refrigeration device such as a door stay, a pull-out drawer or a shelf floor, and a second element (2) having a groove (6) for accepting the spring (5), wherein the groove (6) is delimited by a floor and two arms (3,4) and at least a first of the arms (4) has a projection (8) protruding into the inside of the groove (6), **characterised in that** the spring (5) has a projection (13) facing towards the second arm (3) or the second arm (3) has a projection (13) facing towards the spring (5), and that contact points (12) between the projection (8) of the first arm (4) and the spring (5) and/or contact points (14) between the projection (13) of the spring (5) and the second arm (3) or the projection (13) on the second arm (3) and the spring (5) form a line and that the contact points (12, 14) between the projection (8) of the first arm (4) and the spring (5) on one side and between the projection (13) of the spring (5) and the second arm (3) or the projection (13) on the second arm (3) and the spring (5) on the other side define a plane (9), which is at right angles to the surfaces of the arms (3, 4) touching at the contact points (12, 14) and the spring (5).

2. Refrigeration device with a plug-in connection according to claim 1, **characterised in that** the element (2) having the groove (6) is formed from flat material and that the projection (8) of the first arm (4) is formed by an edge section of the flat material bent back into the groove.

3. Refrigeration device with a plug-in connection according to claim 2, **characterised in that** the second arm (3) also has an edge section bent back into the groove (6).

4. Refrigeration device with a plug-in connection according to claim 1 or 2, **characterised in that** the element (2) having the groove (6) has spring characteristics.

5. Refrigeration device with a plug-in connection according to one of claims 1 to 4, **characterised in that** the spring (5) with its projection (13) is embodied in one piece.

6. Refrigeration device with a plug-in connection according to one of claims 1 to 4, **characterised in that** the projection (13) on the second arm (3) supported against the spring (5) is obtained by non-machining forming of the second arm (3).

## Revendications

1. Appareil frigorifique muni d'un dispositif de liaison par emboîtement comprenant un premier élément (1, 1') présentant un ressort (5), lequel élément est une partie intérieure d'un appareil frigorifique, comme par exemple un casier de rangement de porte, un tiroir ou une tablette, et comprenant un deuxième élément (2) présentant une rainure (6) destinée à loger le ressort (5), la rainure (6) étant délimitée par un fond et deux côtés (3, 4) et au moins un premier des côtés (4) présentant une saillie (8) pénétrant à l'intérieur de la rainure (6), **caractérisé en ce que** le ressort (5) présente une saillie (13) tournée vers le deuxième côté (3) ou **en ce que** le deuxième côté (3) présente une saillie (13) tournée vers le ressort (5), et **en ce que** des points de contact (12) forment une ligne entre la saillie (8) du premier côté (4) et le ressort (5) et/ou **en ce que** des points de contact (14) forment une ligne entre la saillie (13) du ressort (5) et le deuxième côté (3) resp. entre la saillie (13) sur le deuxième côté (3) et le ressort (5), et **en ce que** les points de contact (12, 14) définissent un plan (9) entre la saillie (8) du premier côté (4) et le ressort (5), d'une part, et entre la saillie (13) du ressort (5) et le deuxième côté (3) resp. entre la saillie (13) sur le deuxième côté (3) et le ressort (5), d'autre part, lequel plan (9) est perpendiculaire aux surfaces, se touchant aux points de contact (12, 14), des côtés (3, 4) et du ressort (5).

2. Appareil frigorifique muni d'un dispositif de liaison par emboîtement selon la revendication 1, **caractérisé en ce que** l'élément (2) présentant la rainure (6) est formé à partir d'un matériau plat, et **en ce que** la saillie (8) du premier côté (4) est formée par une section de bord, repliée dans la rainure, du matériau plat.

3. Appareil frigorifique muni d'un dispositif de liaison par emboîtement selon la revendication 2, **caractérisé en ce que** le deuxième côté (3) aussi présente une section de bord repliée dans la rainure (6).

4. Appareil frigorifique muni d'un dispositif de liaison par emboîtement selon la revendication 1, **caractérisé en ce que** l'élément (2) présentant la rainure (6) présente des caractéristiques élastiques.

5. Appareil frigorifique muni d'un dispositif de liaison par emboîtement selon l'une quelconque des revendications 1 à 4, **caractérisé en ce que** le ressort (5) est réalisé d'une seule pièce avec sa saillie (13).

6. Appareil frigorifique muni d'un dispositif de liaison par emboîtement selon l'une quelconque des revendications 1 à 4, **caractérisé en ce que** la saillie (13), s'appuyant sur le ressort (5), située sur le deuxième côté (3) est obtenue par formage sans enlèvement de copeaux du deuxième côté (3).
